# EUROPÄISCHE PATENTSCHRIFT

(11) **EP 2 264 969 B1**
(45) Veröffentlichungstag und Bekanntmachung des Hinweises auf die Patenterteilung: **01.06.2016**
(21) Anmeldenummer: 10006169.6
(22) Anmeldetag: 15.06.2010
(51) Int. Cl.: H04L 29/06

(54) **Besichern einer Datentransaktion zwischen Datenverarbeitungseinrichtungen**
Securing a Datatransaction Between Data-Processing Systems
Sécuriser une transaction de données entre des système électroniques

(30) Priorität: 16.06.2009 DE 102009024986
(43) Veröffentlichungstag der Anmeldung: 22.12.2010
(73) Patentinhaber: Giesecke & Devrient GmbH, 81677 München (DE)
(72) Erfinder: Finkenzeller, Klaus, 85774 Unterföhring (DE)

(56) Entgegenhaltungen:
- EP-A1- 2 043 036
- EP-A2- 1 298 913
- DE-T2- 60 101 997
- US-A1- 2007 011 066
- WEI CHONGYU ET AL: "An Encryption solution in Digital Trunking System", SOFTWARE ENGINEERING, ARTIFICIAL INTELLIGENCE, NETWORKING, AND PARALLEL/DISTRIBUTED COMPUTING, 2007. SNPD 2007. EIGHTH ACIS INTERNATIONAL CONFERENCE ON, IEEE, PISCATAWAY, NJ, USA, 1. Juli 2007 (2007-07-01), Seiten 479-482, XP031124797, ISBN: 978-0-7695-2909-7

## Beschreibung

Die vorliegende Erfindung betrifft ein Verfahren zum sicheren Übertragen von Transaktionsdaten zwischen einer Datenverarbeitungseinrichtung, z.B. einem Server einer Bank, und einem Endgerät, beispielsweise einem PC eines Nutzers, über ein Datenkommunikationsnetzwerk, wie z.B. das Internet.

Es ist bekannt, Transaktionsdaten, beispielsweise zum Ausführen einer Überweisung bei einer Bank, kryptographisch gesichert an die Bank zu übertragen. Auf diese Weise können so genannte "Man-in-the-Middle"-Angriffe in der Regel zuverlässig verhindert werden. Zusätzlich kann ein Nutzer vor dem Ausführen der Transaktion eine Transaktionsbestätigung an die Bank senden. Da eine solche Transaktionsbestätigung, beispielsweise in Form einer TAN, iTAN, mTAN oder dergleichen, nur dem Nutzer und der Bank bekannt ist, werden die Transaktionsdaten damit zusätzlich gesichert. Angesichts neuer Angriffszenarien, wie z.B. dem so genannten "Phishing" oder "Pharming", ist auch die Verwendung von TANs zur Transaktionsbestätigung nur noch bedingt sicher.

Die bekannten Sicherungsmaßnahmen versagen allerdings dann, wenn das Endgerät des Nutzers, beispielsweise ein PC, Notebook, Mobilfunkendgerät oder dergleichen, mittels dessen der Nutzer sich gegenüber der Bank authentisiert sowie die Transaktionsdaten und die Transaktionsbestätigung an die Bank überträgt, von Schadcode, z.B. einem Trojaner, befallen ist. Mittels dieses Schadcodes wird es für einen Angreifer möglich, die von dem Endgerät an die Bank übertragenen Daten sowie die von dem Endgerät von der Bank empfangenen Daten unverschlüsselt mitzulesen und zu manipulieren, ohne dass dies für den Nutzer oder die Bank erkennbar ist. Dies kann beispielsweise dadurch erfolgen, dass Tastatureingaben des Nutzers sowie Ausgaben auf einer Anzeigeeinrichtung, z.B. einem Bildschirm, des Endgeräts von dem Schadcode analysiert und gegebenenfalls verändert werden. Auf diese Weise können beispielsweise Überweisungsdaten zu Gunsten des Angreifers verändert werden, während Authentisierungsdaten, z.B. ein persönliches Passwort des Nutzers, sowie eine Transaktionsbetätigung in Form einer TAN, unverändert bleiben, so dass die Bank die manipulierte Transaktion ausführt, ohne dass sie den Angriff erkennen kann. Auch für den Nutzer ist der Angriff nicht erkennbar. Eine eventuell durch die Bank an den Nutzer übertragene Kontrollanzeige der von der Bank empfangenen Transaktionsdaten vor dem Ausführen der Transaktion kann durch den Schadcode ebenfalls manipuliert werden, um die Veränderung der Transaktionsdaten zu vertuschen.

In der DE 10 2005 044 953 A1 werden ein Verfahren und ein portabler Datenträger zum Verschlüsseln und Signieren von Transaktionsdaten beschrieben. In dem Datenträger ist ein geheimer Schlüssel des Nutzers derart gespeichert, dass dieser Schlüssel nicht auslesbar ist. Der Datenträger ist mit einem Endgerät des Nutzers, z.B. einem PC, verbindbar und eingerichtet, Transaktionsdaten, die zuvor auf einer Anzeigeeinrichtung des Datenträgers angezeigt werden, mittels des Schlüssels zu verschlüsseln und zu signieren, bevor diese dann verschlüsselten und signierten Transaktionsdaten mittels des Endgeräts an eine Datenverarbeitungseinrichtung, z.B. an einen Bank-Server, übertragen werden. Der Nutzer kann in diesem Verfahren allerdings nicht völlig sicher sein, welche Daten bei der Bank tatsächlich ankommen.

Dieses Problem versucht ein Verfahren, welches in der DE 10 2005 053 848 B4, offenbart ist, dadurch zu lösen, dass vor einer ersten Transaktion in einer Initialisierungsphase zwischen dem Nutzer und der Bank ein vertrauenswürdiger Informationsträger in Form eines digitalen Bildes ausgetauscht wird. Nachdem der Nutzer dann mittels seines Endgeräts Transaktionsdaten an die Bank übertragen hat, sendet diese das digitale Bild verändert an den Nutzer zur Kontrolle zurück. Der Nutzer kann dabei einerseits prüfen, ob dem veränderten Bild das ursprünglich ausgetauschte Bild zugrunde liegt. Andererseits kann der Nutzer die übertragenen Transaktionsdaten überprüfen, welche von der Bank - neben eventuell weiteren Daten - in das veränderte Bild deutlich erkennbar, aber schwer manipulierbar integriert worden sind, z.B. als digitales Wasserzeichen. Stimmen die derart übermittelten Transaktionsdaten mit den ursprünglich übertragenen Transaktionsdaten überein, bestätigt der Nutzer die Transaktion mit einer gewöhnlichen TAN.

EP 2 043 036 A1 offenbart ein Verfahren zum Erzeugen einer Transaktionsbestätigung umfassend: Kodieren von Transaktionsdaten und Übertragen der kodierten Transaktionsdaten (transaction-specific code generated by the transaction service provider) von einer Datenübertragungseinrichtung (transaction service provider) an ein Endgerät (device); Prüfen der kodierten Transaktionsdaten (evaluate said transaction-specific code); Erzeugen einer Transaktionsbestätigung (determine a transaction-specific response code.

In der DE 60101997 T2, entsprechend dem erteilten Patent zu EP 1255 178 A2, ist, gemäß dem Oberbegriff von Anspruch 1, ein weiterer portabler Datenträger zum Sichern einer Transaktion beschrieben. Dieser umfasst neben einem Prozessor und einem Speicher einen photoelektrischen Aufnehmer, ein Display sowie einen Fingerabdrucksensor. Mittels des photoelektrischen Aufnehmers wird ein Prüfbild, welches von einer Datenverarbeitungseinrichtung, z.B. einem Bank-Server, an den Nutzer gesendet und auf einer Anzeigeeinrichtung eines Endgeräts des Nutzers angezeigt worden ist, aufgenommen und in dem Datenträger verarbeitet, um einen Kode zu erhalten. Dieser Kode wird auf dem Display des Datenträgers angezeigt, sobald sich der Nutzer gegenüber dem Datenträger mittels seines Fingerabdrucks posi tiv authentisiert hat. Danach gibt der Nutzer den Kode in das Endgerät ein und überträgt diesen damit an die Datenverarbeitungseinrichtung.

Aufgabe der vorliegenden Erfindung ist es daher, eine Transaktion derart zu unterstützen, dass die Transaktionsdaten einerseits gesichert übertragen werden und der Nutzer anderseits überprüfen kann, ob die Transaktionsdaten in der ursprünglich übertragenen Form tatsächlich beim Transaktionspartner angekommen sind.

Diese Aufgabe wird durch ein Verfahren und ein System mit den Merkmalen der unabhängigen Ansprüche gelöst. Vorteilhafte Ausgestaltungen und Weiterbildungen werden in den abhängigen Ansprüchen beschrieben.

Ein erfindungsgemäßes Verfahren zum sicheren Übertragen von Transaktionsdaten zwischen einer Datenverarbeitungseinrichtung und einem Endgerät umfasst demnach folgende Schritte: Transaktionsdaten werden von dem Endgerät über ein Datenkommunikationsnetzwerk an die Datenverarbeitungseinrichtung übertragen. Dort werden die Transaktionsdaten durch die Datenverarbeitungseinrichtung kryptographisch kodiert und die kodierten Transaktionsdaten werden von der Datenverarbeitungseinrichtung über das Datenkommunikationsnetzwerk an das Endgerät übertragen. Von dem Endgerät werden die kryptographisch kodierten Transaktionsdaten dann auf einen portablen Datenträger übertragen. In dem portablen Datenträger werden die kodierten Transaktionsdaten auf Übereinstimmung mit den übertragenen Transaktionsdaten überprüft. Sofern eine Übereinstimmung festgestellt wird, wird in dem Datenträger in Abhängigkeit von den Transaktionsdaten eine kryptographisch kodierte Transaktionsbestätigung erzeugt. Diese Transaktionsbestätigung wird schließlich an die Datenverarbeitungseinrichtung übertragen.

Mittels des Verfahrens kann einerseits zuverlässig geprüft werden, ob die übertragenen Transaktionsdaten tatsächlich in unveränderter Form bei der Datenverarbeitungseinrichtung angekommen sind. Durch Schadcode veränderte Transaktionsdaten würden vom Nutzer spätestens beim Prüfen der von der Datenverarbeitungseinrichtung zur Kontrolle empfangenen kryptographisch kodierten Transaktionsdaten erkannt werden. Die kryptographischen Werkzeuge und Hilfsmittel zum Prüfen der kodierten Transaktionsdaten, beispielsweise kryptographische Schlüssel, liegen auf dem Endgerät nicht vor, sondern lediglich auf dem portablen Datenträger, und können somit von dem Schadcode nicht verwendet werden, um eine Manipulation der übertragenen Transaktionsdaten zu vertuschen. Die kryptographisch kodierte, transaktionsabhängige Transaktionsbestätigung stellt ihrerseits sicher, dass die Transaktionsbestätigung auch tatsächlich die übertragenen Transaktionsdaten betrifft. Es ist somit nicht möglich, dass eine manipulierte Transaktionsbestätigung, welche von Schadcode abhängig von ebenfalls durch den Schadcode manipulierten Transaktionsdaten erzeugt worden ist, an die Datenverarbeitungseinrichtung übertragen wird. Wiederum liegen die kryptographischen Hilfsmittel und Werkzeuge zum Erzeugen der Transaktionsbestätigung lediglich auf dem Datenträger, nicht jedoch auf dem Endgerät vor. Somit können - vom Nutzer überprüfbar - Transaktionsdaten sicher übertragen werden.

Ein erfindungsgemäßes System umfasst eine Datenverarbeitungseinrichtung, ein Endgerät sowie einen portablen Datenträger. Das Endgerät ist eingerichtet, Transaktionsdaten über ein Datenkommunikationsnetzwerk an die Datenverarbeitungseinrichtung zu übertragen. Die Datenverarbeitungseinrichtung ist eingerichtet, die übertragenen Transaktionsdaten kryptographisch zu kodieren und die kryptographisch kodierten Transaktionsdaten an das Endgerät zu übertragen. Der portable Datenträger ist eingerichtet, die kryptographisch kodierten Transaktionsdaten auf Übereinstimmung mit den übertragenen Transaktionsdaten zu prüfen, sowie eine kryptographisch kodierte Transaktionsbestätigung in Abhängigkeit von den Transaktionsdaten zu erzeugen.

In einer bevorzugten Ausführungsform des Verfahrens werden die kryptographisch kodierten Transaktionsdaten von dem Endgerät auf den portablen Datenträger übertragen, indem die kodierten Transaktionsdaten auf einer Anzeigeeinrichtung des Endgeräts, z.B. einem Monitor, angezeigt werden und von dort mittels einer optischen Aufnahmeeinrichtung als Bilddaten aufgenommen und anschließend in dem Datenträger gespeichert werden. Dabei kann der Datenträger selbst die optische Aufnahmeeinrichtung umfassen, beispielsweise einen CCD-Sensor. Bevorzugt ist der Datenträger aber mit einer separaten optischen Aufnahmeeinrichtung, beispielsweise einem Mobilfunkendgerät mit Kamerafunktion oder mit einer Digitalkamera, koppelbar, um die mit der Aufnahmeeinrichtung aufgenommen Bilddaten speichern zu können. Auf diese Weise wird sicher verhindert, dass Schadcode von dem Endgerät auf den Datenträger übergreifen kann.

Die Bilddaten werden anschließend in dem Datenträger mittels eines Bildverarbeitungsverfahrens zu den kodierten Transaktionsdaten transformiert. Eine entsprechende Bildverarbeitungsapplikation ist in einem Speicher des Datenträgers gespeichert und eingerichtet, auf einem Prozessor des Datenträgers ausgeführt zu werden. Die Bildverarbeitungsapplikation extrahiert also aus den Bilddaten die eigentlichen kryptographisch kodierten Transaktionsdaten, die beispielsweise als eine alphanumerische Zeichenkette vorliegen. In diesem Fall umfasst das Bildverarbeitungsverfahren eine Texterkennungsfunktion.

In einer besonders bevorzugten Ausführungsform werden die kryptographisch kodierten Transaktionsdaten von der Datenverarbeitungseinrichtung in Form eines Strichcodes an das Endgerät übertragen, wo sie auf einer Anzeigeeinrichtung des Endgeräts angezeigt werden. Die Bildverarbeitungsapplikation des Datenträgers ist dann eingerichtet, einen Strichcode innerhalb der Bilddaten zu erkennen und auszuwerten, d.h. zu den kryptographisch kodierten Transaktionsdaten zu transformieren, welche in dem Datenträger dann weiterverarbeitet werden können. In Form eines Strichcodes dargestellte Informationen können in bekannter Weise besonders einfach optisch aufgenommen und ausgewertet werden.

Alternative Ausführungsformen sehen andere Übertragungswege und Übertragungsverfahren zwischen dem Endgerät und dem portablen Datenträger vor, um die kryptographisch kodierten Transaktionsdaten zu übertragen. Es sind im Wesentlichen alle bekannten kontaktbehaftet oder kontaktlos operierenden Übertragungsverfahren einsetzbar, solange sichergestellt ist, dass der Datenträger durch die Übertragung nicht von auf dem Endgerät befindlichem Schadcode infiziert wird. Dazu können geeignete bekannte Sicherheitsvorkehrungen in dem Datenträger getroffen werden, sowohl auf Ebene der Hardware als auch auf Ebene eines den Datenträger steuernden Betriebssystems.

Vorzugsweise werden die Transaktionsdaten durch die Datenverarbeitungseinrichtung durch Verschlüsseln oder durch digitales Signieren oder durch Anwenden einer kryptographischen Hashfunktion auf die Transaktionsdaten kryptographisch kodiert. Es können auch verschlüsselte Transaktionsdaten zusätzlich digital signiert werden.

Entsprechend werden die kryptographisch kodierten Transaktionsdaten auf dem Datenträger geprüft. Liegen diese als verschlüsselte Transaktionsdaten vor, so werden diese entschlüsselt. Liegen die kryptographisch kodierten Transaktionsdaten als digital signierte Transaktionsdaten vor, wird die digitale Signatur verifiziert. Die entschlüsselten oder verifizierten Transaktionsdaten können dann z.B. auf einem Display des Datenträgers oder eines mit dem Datenträger gekoppelten Geräts angezeigt werden und ein Nutzer kann eine Übereinstimmung mit den ursprünglich übertragenen Transaktionsdaten überprüfen. Es ist aber auch möglich, dass die übertragenen Transaktionsdaten mittels einer Eingabeeinrichtung in den Datenträger eingegeben werden und die Überprüfung auf Übereinstimmung vollständig in dem Datenträger erfolgt. Liegen die kryptographisch kodierten Transaktionsdaten als Hashwert vor, der durch Anwenden einer schlüsselbasierten Hashfunktion auf die Transaktionsdaten erzeugt worden ist, so wird diese Hashfunktion erneut auf die übertragenen Transaktionsdaten angewendet, welche dazu zuvor in den Datenträger eingebracht worden sind. Die beiden Hashwerte werden anschließend auf Übereinstimmung geprüft.

In der Regel werden die Transaktionsdaten in bekannter Weise verschlüsselt und entschlüsselt. Auch zum digitalen Signieren und Verifizieren können bekannte Kryptosysteme verwendet werden. Es ist allerdings darauf zu achten, dass eine Verschlüsselung nicht von auf dem Endgerät befindlichem Schadcode nachgeahmt werden kann. Dies wäre zum Beispiel der Fall bei der Verwendung eines asymmetrischen Kryptosystems, da die zum Verschlüsseln verwendeten öffentlichen Schlüssel in der Regel allgemein zugänglich sind. Mittels des Schadcodes könnten an die Datenverarbeitungseinrichtung übertragene Transaktionsdaten manipuliert werden. Die von der Datenverarbeitungseinrichtung an das Endgerät übertragenen kryptographisch kodierten - manipulierten - Transaktionsdaten könnten von dem Schadcode durch die mittels des öffentlichen Schlüssels des Nutzers kryptographisch kodierten - ursprünglich übertragenen - Transaktionsdaten ersetzt werden, so dass der Nutzer die Manipulation nicht erkennt. In gleicher Weise könnte eine - manipulierte - Transaktionsbetätigung in Form von mittels des öffentlichen Schlüssels der Datenverarbeitungseinrichtung verschlüsselten - manipulierten - Transaktionsdaten von dem Schadcode erzeugt und übertragen werden. Eine in dieser Weise manipulierte Transaktion wäre weder für die Datenverarbeitungseinrichtung noch für den Nutzer des Endgeräts erkennbar. Es bietet sich also - auch zum Verschlüsseln - die Verwendung geheimer Schlüssel an, welche vor Beginn der Transaktion geeignet auszutauschen sind.

Die kryptographisch kodierte, transaktionsabhängige Transaktionsbestätigung wird vorzugsweise dadurch erzeugt, dass die Transaktionsdaten verschlüsselt oder digital signiert werden oder beide Operationen nacheinander auf die Transaktionsdaten angewendet werden. Die Transaktionsbestätigung kann auch dadurch gebildet werden, dass eine schlüsselbasierte kryptographische Hashfunktion auf die Transaktionsdaten angewendet wird. In allen diesen Fällen ist die Transaktionsbestätigung transaktionsabhängig, da die Transaktionsdaten die Basis zur Bildung der Transaktionsbestätigung bilden. Die genannten kryptographischen Verfahren eignen sich besonders zum Erzeugen der kryptographisch kodierten Transaktionsbestätigung, da implementierte Standards vorliegen und eine hohe Sicherheit gewährleisten. Des Weiteren können dieselben kryptographischen Funktionalitäten des Datenträgers, die bereits zum Prüfen der kryptographisch kodierten Transaktionsdaten verwendet werden, auch zum Erzeugen der kryptographisch kodierten Transaktionsbestätigung herangezogen werden. Alternative Verfahren zum transaktionsabhängigen Erzeugen der kryptographisch kodierten Transaktionsbestätigung können ebenfalls Verwendung finden, solange sichergestellt ist, dass auf dem Endgerät befindlicher Schadcode diese nicht - unter Verwendung manipulierter Transaktionsdaten - nachahmen kann. Dazu eignen sich, wie beschrieben, bekannte kryptographische Verfahren, die Schlüssel verwenden, die nicht allgemein zugänglich oder auf dem Endgerät gespeichert sind.

Das Übertragen der kryptographisch kodierten Transaktionsbestätigung an die Datenverarbeitungseinrichtung kann auf verschiedene Arten erfolgen. Gemäß einer ersten Ausführungsform des erfindungsgemäßen Verfahrens wird die kryptographisch kodierte Transaktionsbestätigung auf einer Displayeinrichtung des Datenträgers oder eines mit dem Datenträger gekoppelten Geräts angezeigt. Der Nutzer gibt dann die angezeigte Transaktionsbestätigung in das Endgerät ein, beispielsweise mittels einer Tastatur, von wo aus sie an die Datenverarbeitungseinrichtung über das Datenkommunikationsnetzwerk, z.B. das Internet, übertragen wird.

Gemäß einer zweiten Ausführungsform ist der Datenträger mit einem Mobilfunkendgerät gekoppelt. Die kryptographisch kodierte Transaktionsbestätigung wird dann direkt mittels des Mobilfunkendgeräts - unter Aussparung des Endgeräts - über ein Mobilfunknetz an die Datenverarbeitungseinrichtung übertragen.

Die Erfindung wird im Folgenden mit Bezug auf die beiliegenden Zeichnungen exemplarisch beschrieben. Darin zeigen:
- Figur 1: einen portablen Datenträger in Form einer sicheren Speicherkarte;
- Figur 2: ein Mobilfunkendgerät mit Kamerafunktion, mit welchem der Datenträger aus Fig. 1 gekoppelt ist; und
- Figur 3: Schritte einer bevorzugten Ausführungsform des erfindungsgemäßen Verfahrens.

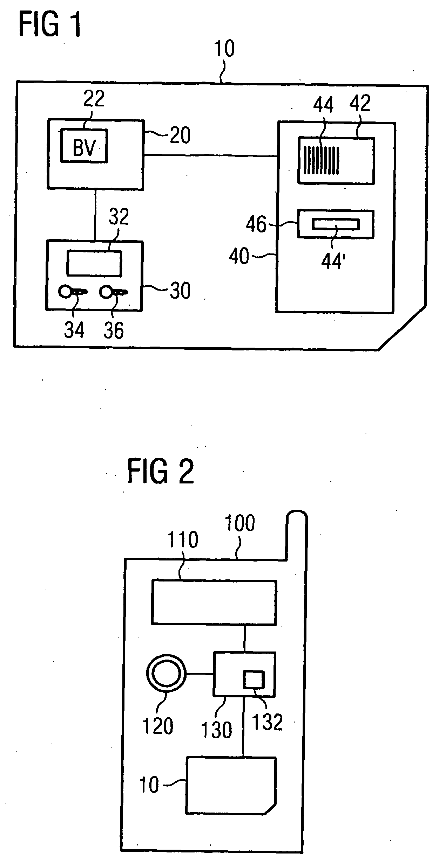

Mit Bezug auf Figur 1 umfasst ein portabler Datenträger 10, der hier als sichere Speicherkarte ausgebildet ist, einen Speicher 40 in Form eines FLASH-Speichers sowie einen Controller 20 und einen sicheren Controller 30.

Der Controller 20 verwaltet den Speicher 40 und kann gesichert zu behandelnde Daten mit dem sicheren Controller 30 austauschen. Der Controller 20 umfasst weiterhin eine Bildverarbeitungsapplikation BV. Diese ist eingerichtet, einen in dem Speicher 40 gespeicherten Bilddatensatz 42 danach zu untersuchen, ob dieser Bilddatensatz 42 einen Strichcode 44 umfasst. Erkennt die Bildverarbeitungsapplikation BV einen solchen Strichcode 44, so wertet sie diesen aus, d.h. transformiert den Strichcode 44 zu mittels des Strichcodes 44 kodierten Daten 44'. Diese Daten 44' können in einer mit dem Bilddatensatz 42 assoziierten Datei 46 gespeichert und durch den Controller 20 oder den sicheren Controller 30 weiterverarbeitet werden.

Der Controller 20 ist weiterhin in der Lage, alle in dem Speicher 40 gespeicherten Bilddatensätze 42 auf darin enthaltene kodierte Transaktionsdaten, beispielsweise mittels eines Strichcodes 44 kodierte Daten 44' innerhalb eines Bilddatensatzes 42 zu überprüfen. Somit ist es möglich, dass die Bilddatensätze 42 mit enthaltenen kodierten Transaktionsdaten zwischen Bilddatensätzen ohne enthaltene kodierte Transaktionsdaten, beispielsweise mit dem optischen Aufnahmevorrichtung aufgenommene Urlaubs- oder Erlebnisbilder, sind. Somit ist die Sicherheit des Verfahrens erhöht, da Schadsoftware zunächst den Bilddatensatz 42 finden muss, der die kodierten Transaktionsdaten enthält.

Der sichere Controller 30, der gegen unberechtigten Zugriff besonders gesichert ist, umfasst eine Kryptographieapplikation 32, mittels derer Daten verund entschlüsselt sowie digital signiert und verifiziert werden können. Auch die Anwendung kryptographischer Hashfunktionen liegt im Funktionsumfang der Kryptographieapplikation 32, welche zusätzlich zwei geheime Schlüssel 34 und 36 umfasst. Alternativ kann die Bildverarbeitungsapplikation BV auch im Controller 30 ausgeführt werden.

Ein in Fig. 2 gezeigtes Mobilfunkendgerät 100 umfasst ein Display 110, eine digitale Kamera 120, einen Prozessor 130 sowie eine Schnittstelle (nicht gezeigt) zum Aufnehmen einer sicheren Speicherkarte, beispielsweise den Datenträger 10 aus Fig.1. Die Steuerapplikation 132 ist eingerichtet, mittels der Kamera 120 aufgenommene Bilddaten 42 zum Speichen an den Datenträger 10 zu übertragen, wenn dieser in das Mobilfunkgerät 100 integriert ist, sowie von dem Controller 20 des Datenträgers 10 bereitgestellte Daten auf dem Display 110 anzuzeigen.

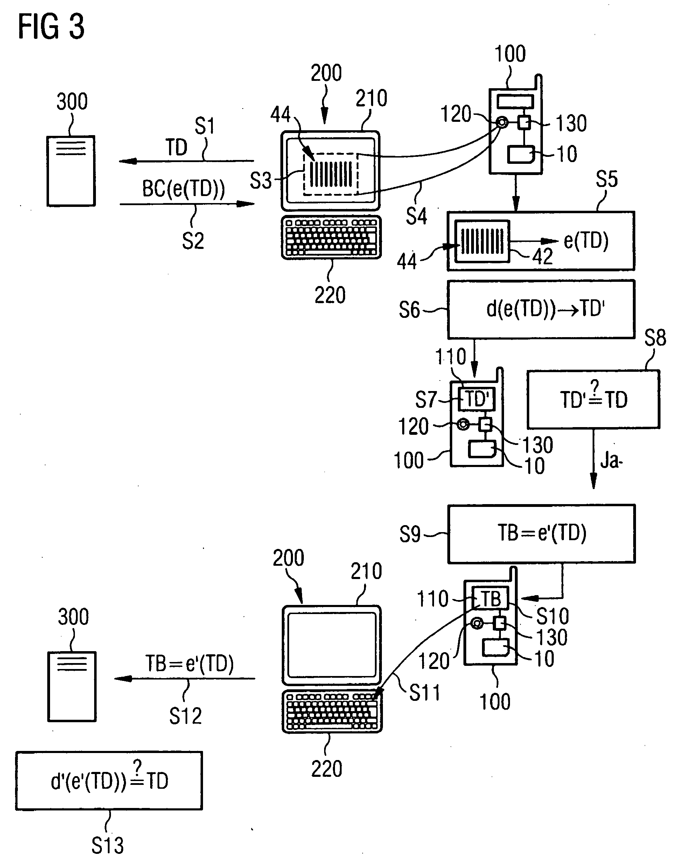

Mit Bezug auf Fig. 3 werden nun die Schritte eines Verfahrens zum sicheren Übertragen von Transaktionsdaten TD zwischen einem Endgerät 200 eines Nutzers, z.B. einem PC, und einer Datenverarbeitungseinrichtung 300, beispielsweise einem Server einer Bank, beschrieben. Die Transaktionsdaten TD können beispielsweise eine auszuführende Überweisung definieren und eine Kontonummer und eine Bankleitzahl eines Empfängers sowie einen zu überweisenden Betrag umfassen. Die Datenübertragung zwischen dem Endgerät 200 und dem Server 300 erfolgt über ein Datenkommunikationsnetzwerk, vorzugsweise das Internet.

Nachdem sich der Nutzer bei dem Server 300 der Bank authentisiert hat, beispielsweise mittels eines persönlichen Passworts oder einer PIN, werden in einem ersten Schritt S1 die Transaktionsdaten TD von dem Endgerät 200 an den Bank-Server 300 übertragen.

Der Bank-Server 300 verschlüsselt die Transaktionsdaten TD mittels eines geheimen Schlüssels 34, welcher auch dem Nutzer zuvor zusammen mit dem Datenträger 10 zur Verfügung gestellt worden ist. Die verschlüsselten Transaktionsdaten e(TD) werden in Schritt S2 in Form eines Strichcode BC, 44 an das Endgerät 200 übertragen und dort in Schritt S3 auf einer Anzeigeeinrichtung 210, z.B. einem Monitor, angezeigt.

In Schritt S4 fotografiert der Nutzer mittels der Kamera 120 des Mobilfunkendgeräts 100 das auf der Anzeigeeinrichtung 210 angezeigte Bild, welches den Strichcode 44 umfasst. Die entsprechenden Bilddaten 42 werden von der Steuerapplikation 132 (vgl. Fig. 2) des Mobilfunkendgeräts 100 an den Datenträger 10 weitergegeben und mittels des Controllers 20 in dem Speicher 40 des Datenträgers 10 als Bilddatensatz 42 gespeichert.

In Schritt S5 analysiert die Bildverarbeitungsapplikation BV den Bilddatensatz 42, erkennt darin den Strichcode 44 und transformiert diesen zu den verschlüsselten Transaktionsdaten e(TD).

Die verschlüsselten Transaktionsdaten e(TD) werden nun von dem Controller 20 an den sicheren Controller 30 weitergeleitet. Dort werden die verschlüsselten Transaktionsdaten e(TD) mittels des sicheren Schlüssels 34 entschlüsselt. Die entschlüsselten Transaktionsdaten TD' werden schließlich von dem Controller 20 der Steuerapplikation 132 des Mobilfunkendgeräts 100 zum Anzeigen der entschlüsselten Transaktionsdaten TD' auf dem Display 110 in Schritt S7 bereitgestellt.

Der Nutzer prüft nun in Schritt S8, ob die auf dem Display 110 angezeigten, entschlüsselten Transaktionsdaten TD' mit den ursprünglich in Schritt S1 übertragenen Transaktionsdaten TD übereinstimmen. Ist dies der Fall, so wird dies dem Datenträger bestätigt. Im gegenteiligen Fall wird das Verfahren abgebrochen. Sofern Übereinstimmung vorliegt, wird in dem sicheren Controller 30 in Schritt S9 eine von den Transaktionsdaten TD abhängige Transaktionsbestätigung TB in Form einer eTAN erzeugt, indem die Transaktionsdaten TD mittels des zweiten geheimen Schlüssels 36 verschlüsselt werden.

Diese Transaktionsbestätigung TB wird in Schritt S10 in der vorstehend beschriebenen Weise auf dem Display 110 des Mobilfunkendgeräts 100 angezeigt.

Alternativ können die entschlüsselten Transaktionsdaten TD' zusammen mit einer bereits abhängig davon erzeugten Transaktionsbestätigung TB auf dem Display 110 angezeigt werden, ohne dass der Nutzer zuvor die Übereinstimmung der entschlüsselten Transaktionsdaten TD' mit den ursprünglich übertragenen Transaktionsdaten TD bestätigt. Erkennt der Nutzer erst an dieser Stelle, dass keine Übereinstimmung vorliegt, so kann er das Verfahren immer noch abbrechen.

In Schritt S11 gibt der Nutzer die angezeigte Transaktionsbestätigung TB in das Endgerät 200 ein, beispielsweise über eine Tastatur 220.

Die Transaktionsbestätigung TB wird in Schritt S12 mittels des Endgeräts 200 an den Server 300 der Bank übertragen und dort in Schritt S13 überprüft, indem die empfangene Transaktionsbestätigung TB mittels des geheimen Schlüssels 36 entschlüsselt wird, der, wie der geheime Schlüssel 34, lediglich auf dem Datenträger 10 und in dem Bank-Server 300 vorliegt. Ergibt die Entschlüsselung die ursprünglich übertragenen Transaktionsdaten TD, so wird die Transaktion durch die Bank ausgeführt. Anderenfalls ist eine Manipulation der Transaktionsdaten TD anzunehmen und die Bank storniert die Transaktion, d.h. die Überweisung wird nicht ausgeführt.

Anstatt die Transaktionsdaten TD zu verschlüsseln, könnte der Bank-Server 300 die Transaktionsdaten TD auch mittels eines geheimen Schlüssels 34, 36 digital signieren oder einen Hashwert durch Anwenden einer schlüsselbasierten Hashfunktion bilden und die entsprechend kryptographisch kodierten Transaktionsdaten e(TD) in Schritt S2 an das Endgerät 200 übertragen. Die Behandlung der verschlüsselten Transaktionsdaten e(TD) in dem Datenträger 10 durch die Kryptographieapplikation 32 ist dann entsprechend anzupassen.

In gleicher Weise kann das Erzeugen der Transaktionsbestätigung TB durch digitales Signieren der Transaktionsdaten TD oder durch Bilden des beschriebenen Hashwertes über die Transaktionsdaten TD, nun aber unter Verwendung des jeweils anderen sicheren Schlüssels 36, 34, erfolgen.

Die Verwendung eines Strichcodes BC, 44 beim Übertragen der verschlüsselten Transaktionsdaten e(TD) an das Endgerät 200 ist optional uns kann auch unterbleiben. In diesem Fall würde die Bildverarbeitungsapplikation BV die Bilddaten 42 mittels einer Texterkennungsfunktionalität behandeln und auf diese Weise die alphanumerisch kodierten Transaktionsdaten TD erkennen und extrahieren.

Das Übertragen der Transaktionsbestätigung TB an den Bank-Server 300 in Schritt S12 kann auch unter Umgehung des Endgeräts 200 erfolgen. Dazu wird die Transaktionsbestätigung TB direkt mittels des Mobilfunkendgeräts 100 über ein Mobilfunknetz an den Bank-Server 300 gesendet.

## Patentansprüche

1. Verfahren zum sicheren Übertragen von Transaktionsdaten (TD) zwischen einer Datenverarbeitungseinrichtung (300) und einem Endgerät (200), umfassend die Schritte:
- Übertragen (S3; S4) von Transaktionsdaten von dem Endgerät (200) auf einen portablen Datenträger (10), indem die Transaktionsdaten auf einer Anzeigeeinrichtung (210) des Endgerätes (200) angezeigt werden (S3) und von dort mittels einer optischen Aufnahmeeinrichtung (120) als Bilddaten (42) aufgenommen und als Bilddaten (42) in dem Datenträger (10) gespeichert werden;
- Erzeugen (S9) einer kryptographisch kodierten Transaktionsbestätigung (TB) in dem Datenträger (10) in Abhängigkeit von den Transaktionsdaten (TD); und
- Übertragen (S12) der kryptographisch kodierten Transaktionsbestätigung (TB) an die Datenverarbeitungseinrichtung (300);
**gekennzeichnet durch die Schritte:**
- Übertragen (S1) der Transaktionsdaten (TD) von dem Endgerät (200) an die Datenverarbeitungseinrichtung (300) über ein Datenkommunikationsnetzwerk;
- Kryptographisches Kodieren der übertragenen Transaktionsdaten durch die Datenverarbeitungseinrichtung und Übertragen (S2) der kodierten Transaktionsdaten (e(TD)) von der Datenverarbeitungseinrichtung (300) an das Endgerät (200) über das Datenkommunikationsnetzwerk;
- beim Übertragen (S3; S4) der Transaktionsdaten von dem Endgerät (200) auf einen portablen Datenträger (10), Übertragen der kodierten Transaktionsdaten (e(TD)); indem auf der Anzeigeeinrichtung (210) die kodierten Transaktionsdaten (e(TD)) angezeigt werden;
- Prüfen (S6; S7; S8) der kodierten Transaktionsdaten (e(TD)) in dem portablen Datenträger (10) auf Übereinstimmung mit den übertragenen Transaktionsdaten (TD) und Erzeugen (S9) der kryptographisch kodierten Transaktionsbestätigung (TB) in dem Datenträger (10) in Abhängigkeit von den Transaktionsdaten (TD), sofern die Übereinstimmung festgestellt wird.

2. Verfahren nach Anspruch 1, **dadurch gekennzeichnet, dass** der Datenträger (10) oder das Endgerät (200), insbesondere ein Mobilfunkgerät mit Kamerafunktion die optische Aufnahmeeinrichtung (120) umfasst.

3. Verfahren nach Anspruch 2, **dadurch gekennzeichnet, dass** die Bilddaten (42) in dem Datenträger (10) mittels eines Bildverarbeitungsverfahrens zu den kodierten Transaktionsdaten (e(TD)) transformiert (S5) werden.

4. Verfahren nach Anspruch 2 und 3, **dadurch gekennzeichnet, dass** die kodierten Transaktionsdaten (e(TD)) in Form eines Strichcodes (44) an das Endgerät (200) übertragen und auf der Anzeigeeinrichtung (210) angezeigt werden, wobei das Bildverarbeitungsverfahren den Strichcode (44) innerhalb der Bilddaten (42) erkennt und zu den kodierten Transaktionsdaten (e(TD)) transformiert.

5. Verfahren nach einem der Ansprüche 1 bis 4, **dadurch gekennzeichnet, dass** die Transaktionsdaten (TD) durch Verschlüsseln und/oder durch digitales Signieren und/ oder durch Anwenden einer schlüsselbasierten kryptographischen Hashfunktion kryptographisch kodiert werden.

6. Verfahren nach Anspruch 5, **dadurch gekennzeichnet, dass** die kryptographisch kodierten Transaktionsdaten (e(TD)) als verschlüsselte Transaktionsdaten durch Entschlüsseln und/oder als digital signierte Transaktionsdaten durch digitales Verifizieren oder als Hashwert der kryptographischen Hashfunktion durch erneutes Anwenden der schlüsselbasierten kryptographischen Hashfunktion auf die übertragenen Transaktionsdaten (TD) geprüft werden.

7. Verfahren nach einem der Ansprüche 1 bis 6, **dadurch gekennzeichnet, dass** die kryptographisch kodierte Transaktionsbestätigung (TB) durch Verschlüsseln der Transaktionsdaten (TD) und/oder durch digitales Signieren der Transaktionsdaten (TD) und/oder durch Anwenden einer schlüsselbasierten kryptographischen Hashfunktion auf die Transaktionsdaten (TD) erzeugt wird.

8. Verfahren nach einem der Ansprüche 1 bis 7, **dadurch gekennzeichnet, dass** die kryptographisch kodierte Transaktionsbestätigung (TB) auf einer Displayeinrichtung (110) des Datenträgers (10) oder eines mit dem Datenträger (10) gekoppelten Geräts (100) angezeigt (S10), in das Endgerät (200) eingegeben (S11) und mittels des Endgeräts (200) über das Datenkommunikationsnetzwerk an die Datenverarbeitungseinrichtung (300) übertragen wird (S12).

9. Verfahren nach einem der Ansprüche 1 bis 7, **dadurch gekennzeichnet, dass** der Datenträger (10) in ein Mobilfunkendgerät (100) integriert ist und die kryptographisch kodierte Transaktionsbestätigung (TB) mittels des Mobilfunkendgeräts (100) über ein Mobilfunknetzwerk an die Datenverarbeitungseinrichtung (300) übertragen wird.

10. System, umfassend eine Datenverarbeitungseinrichtung (300) und ein Endgerät (200) sowie einen portablen Datenträger (10), die so eingerichtet sind, dass Transaktionsdaten auf einer Anzeigeeinrichtung (210) des Endgeräts (200) angezeigt werden (S3) und von dort mittels einer optischen Aufnahmeeinrichtung (120) als Bilddaten (42) aufgenommen werden, **dadurch gekennzeichnet, dass** das System so eingerichtet ist um ein Verfahren, wie in Ansprüchen 1-9 definiert, auszuführen.

11. System nach Anspruch 10, **dadurch gekennzeichnet, dass** der Datenträger (10) eingerichtet ist, kodierte Transaktionsdaten (e(TD)) in Form von Bilddaten (42) zu speichern und die Bilddaten (42) mittels einer Bildverarbeitungsapplikation (BV) zu den kodierten Transaktionsdaten (e(TD)) zu transformieren.

12. System nach Anspruch 11 **dadurch gekennzeichnet, dass** die Bildverarbeitungsapplikation (BV) des Datenträgers (10) eingerichtet ist, einen Strichcode (44) innerhalb der Bilddaten (42) zu erkennen und zu den kodierten Transaktionsdaten (e(TD)) zu transformieren.

## Claims

1. A method for securely transmitting transaction data (TD) between a data processing device (300) and a terminal (200), comprising the steps of:
- transmitting (S3; S4) transaction data from the terminal (200) to a portable data carrier (10), by the transaction data being displayed (S3) on a display device (210) of the terminal (200) and being recorded from there as image data (42) by means of an optical recording device (120) and being stored as image data (42) in the data carrier (10);
- generating (S9) a cryptographically encoded transaction confirmation (TB) in the data carrier (10) in dependence on the transaction data (TD); and
- transmitting (S12) the cryptographically encoded transaction confirmation (TB) to the data processing device (300);
**characterized by** the steps of:
- transmitting (S1) the transaction data (TD) from the terminal (200) to the data processing device (300) via a data communication network;
- cryptographically encoding the transmitted transaction data by the data processing device and transmitting (S2) the encoded transaction data (e(TD)) from the data processing device (300) to the terminal (200) via the data communication network;
- upon transmission (S3; S4) of the transaction data from the terminal (200) to a portable data carrier (10), transmitting the encoded transaction data (e(TD)) by displaying the encoded transaction data (e(TD)) on the display device (210);
- checking (S6; S7; S8) the encoded transaction data (e(TD)) in the portable data carrier (10) for a match with the transmitted transaction data (TD) and generating (S9) the cryptographically encoded transaction confirmation (TB) in the data carrier (10) in dependence on the transaction data (TD), if the match is found.

2. The method according to claim 1, **characterized in that** the data carrier (10) or the terminal (200), in particular a mobile communication device with camera function, comprises the optical recording device (120).

3. The method according to claim 2, **characterized in that** the image data (42) are transformed (S5) in the data carrier (10) by means of an image processing method to form the encoded transaction data (e(TD)).

4. The method according to claim 2 and 3, **characterized in that** the encoded transaction data (e(TD)) are transmitted in the form of a bar code (44) to the terminal (200) and are displayed on the display device (210), wherein the image processing method recognizes the bar code (44) within the image data (42) and transforms said bar code to form the encoded transaction data (e(TD)).

5. The method according to any of the claims 1 to 4, **characterized in that** the transaction data (TD) are cryptographically encoded by encryption and/or by digitally signing and/or by applying a key-based cryptographic hash function.

6. The method according to claim 5, **characterized in that** the cryptographically encoded transaction data (e(TD)) as encrypted transaction data are checked by decryption and/or as digitally signed transaction data by digital verification or as a hash value of the cryptographic hash function by re-application of the key-based cryptographic hash function to the transmitted transaction data (TD).

7. The method according to any of the claims 1 to 6, **characterized in that** the cryptographically encoded transaction confirmation (TB) is generated by encrypting the transaction data (TD) and/or by digitally signing the transaction data (TD) and/or by applying a key-based cryptographic hash function to the transaction data (TD).

8. The method according to any of the claims 1 to 7, **characterized in that** the cryptographically encoded transaction confirmation (TB) is displayed (S10) on a display device (110) of the data carrier (10) or of a device (100) coupled to the data carrier (10), input (S11) in the terminal (200) and transmitted (S12) by means of the terminal (200) to the data processing device (300) via the data communication network.

9. The method according to any of the claims 1 to 7, **characterized in that** the data carrier (10) is integrated in a mobile communication terminal (100) and the cryptographically encoded transaction confirmation (TB) is transmitted by means of the mobile communication terminal (100) to the data processing device (300) via a mobile communication network.

10. A system comprising a data processing device (300) and a terminal (200) and a portable data carrier (10), which are so adapted that transaction data are displayed (S3) on a display device (210) of the terminal (200) and are recorded from there as image data (42) by means of an optical recording device (120), **characterized in that** the system is adapted in order to execute a method as defined in claims 1 to 9.

11. The system according to claim 10, **characterized in that** the data carrier (10) is adapted to store encoded transaction data (e(TD)) in the form of image data (42) and to transform the image data (42) by means of an image processing application (BV) to form the encoded transaction data (e(TD)).

12. The system according to claim 11, **characterized in that** the image processing application (BV) of the data carrier (10) is adapted to recognize a bar code (44) within the image data (42) and to transform said bar code to form the encoded transaction data (e(TD)).

## Revendications

1. Procédé de transmission sécurisée de données de transaction (TD) entre un dispositif de traitement de données (300) et un terminal (200), comprenant les étapes:
- transmission (S3; S4) de données de transaction du terminal (200) à un support de données portable (10), ce qui a lieu en ce que les données de transaction sont affichées (S3) sur un dispositif d'affichage (210) du terminal (200) et, de là, au moyen d'un dispositif d'enregistrement optique (120), sont enregistrées en tant que données d'image (42) et mémorisées en tant que données d'image (42) dans le support de données (10);
- génération (S9), dans le support de données (10), d'une confirmation de transaction (TB) codée cryptographiquement, en fonction des données de transaction (TD); et
- transmission (S 12) de la confirmation de transaction (TB) codée cryptographiquement au dispositif de traitement de données (300);
**caractérisé par les étapes:**
- transmission (S1) des données de transaction (TD) du terminal (200) au dispositif de traitement de données (300) par l'intermédiaire d'un réseau de communication de données;
- codage cryptographique, par le dispositif de traitement de données, des données de transaction transmises, et transmission (S2) des données de transaction (e(TD)) codées du dispositif de traitement de données (300) au terminal (200) par l'intermédiaire du réseau de communication de données;
- lors de la transmission (S3; S4) des données de transaction depuis le terminal (200) sur un support de données (10) portable, transmission des données de transaction (e(TD)) codées, ce qui a lieu en ce que, sur le dispositif d'affichage (210), les données de transaction (e(TD)) codées sont affichées;
- examen (S6; S7; S8), dans le support de données (10) portable, des données de transaction (e(TD)) codées quant à leur concordance avec les données de transaction (TD) transmises, et génération (S9), dans le support de données (10), de la confirmation de transaction (TB) codée cryptographiquement, en fonction des données de transaction (TD), dans la mesure où la concordance est constatée.

2. Procédé selon la revendication 1, **caractérisé en ce que** le support de données (10) ou le terminal (200), en particulier un appareil de radiocommunication mobile avec fonction caméra, comprend le dispositif d'enregistrement optique (120).

3. Procédé selon la revendication 2, **caractérisé en ce que** les données d'image (42) sont transformées (S5) dans le support de données (10), au moyen d'un procédé de traitement d'image, en les données de transaction (e(TD)) codées.

4. Procédé selon la revendication 2 ou 3, **caractérisé en ce que** les données de transaction (e(TD)) codées sont transmises sous forme d'un code-barres (44) au terminal (200) et affichées sur le dispositif d'affichage (210), le procédé de traitement d'image reconnaissant le code-barres (44) parmi les données d'image (42) et le transformant en les données de transaction (e(TD)) codées.

5. Procédé selon une des revendications de 1 à 4, **caractérisé en ce que** les données de transaction (TD) sont codées cryptographiquement par chiffrage et/ou par signature numérique et/ou par application d'une fonction de hachage cryptographique basée sur clé.

6. Procédé selon la revendication 5, **caractérisé en ce que** les données de transaction (e(TD)) codées cryptographiquement sont examinées en tant que données de transaction chiffrées par déchiffrage et/ou en tant que données de transaction signées numériquement par vérification numérique et/ou en tant que valeur de hachage de la fonction de hachage cryptographique par réapplication de la fonction de hachage cryptographique basée sur clé aux données de transaction (TD) transmises.

7. Procédé selon une des revendications de 1 à 6, **caractérisé en ce que** la confirmation de transaction (TB) codée cryptographiquement est générée par chiffrage des données de transaction (TD) et/ou par signature numérique des données de transaction (TD) et/ou par application d'une fonction de hachage cryptographique basée sur clé aux données de transaction (TD).

8. Procédé selon une des revendications de 1 à 7, **caractérisé en ce que** la confirmation de transaction (TB) codée cryptographiquement est affichée (S10) sur un dispositif d'écran (110) du support de données (10) ou d'un appareil (100) couplé avec le support de données (10), est entrée (S11) dans le terminal (200) et est transmise (S 12) au moyen du terminal (200) au dispositif de traitement de données (300) par l'intermédiaire du réseau de communication de données.

9. Procédé selon une des revendications de 1 à 7, **caractérisé en ce que** le support de données (10) est intégré dans un terminal de radiocommunication mobile (100) et **en ce que** la confirmation de transaction (TB) codée cryptographiquement est transmise au moyen du terminal de radiocommunication mobile (100) au dispositif de traitement de données (300) par l'intermédiaire d'un réseau de radiocommunication mobile.

10. Système, comprenant un dispositif de traitement de données (300) et un terminal (200) ainsi qu'un support de données (10) portable qui sont configurés de telle façon que des données de transaction sont affichées (S3) sur un dispositif d'affichage (210) du terminal (200) et, de là, au moyen d'un dispositif d'enregistrement optique (120), sont enregistrées en tant que données d'image (42), **caractérisé en ce que** le système est configuré pour exécuter un procédé tel que dans les revendications de 1 à 9.

11. Système selon la revendication 10, **caractérisé en ce que** le support de données (10) est configuré pour mémoriser sous forme de données d'image (42) des données de transaction (e(TD)) codées et pour transformer les données d'image (42), au moyen d'une application de traitement d'image (BV), en les données de transaction (e(TD)) codées.

12. Système selon la revendication 11, **caractérisé en ce que** l'application de traitement d'image (BV) du support de données (10) est configurée pour reconnaître un code-barres (44) parmi les données d'image (42) et pour le transformer en les données de transaction (e(TD)) codées.
